# FASCICULE DE BREVET EUROPEEN

(11) **EP 0 584 350 B1**
(45) Date de publication et mention de la délivrance du brevet: **11.06.1997**
(21) Numéro de dépôt: 93918739.9
(22) Date de dépôt: 10.03.1993
(51) Int. Cl.: F01N 3/20, F01N 3/28

(54) **LIGNE D'ECHAPPEMENT POUR MOTEURS A COMBUSTION INTERNE A DEUX TEMPS**
ABGASLEITUNG FÜR EINE ZWEITAKT-BRENNKRAFTMASCHINE
TWO STROKE INTERNAL COMBUSTION ENGINE EXHAUST LINE

(30) Priorité: 10.03.1992 FR 9202936
(43) Date de publication de la demande: 02.03.1994
(73) Titulaire: INSTITUT FRANCAIS DU PETROLE, 92506 Rueil-Malmaison Cédex (FR)
(72) Inventeur: DURET, Pierre, F-78500 Sartrouville (FR); MONNIER, Gaétan, F-92500 Rueil-Malmaison (FR)
(86) Numéro de dépôt international: FR9300234
(87) Numéro de publication internationale: WO9318285

(56) Documents cités:
- EP-A- 0 404 320
- EP-A- 0 417 412
- DE-A- 2 432 285
- DE-A- 3 903 879
- US-A- 3 972 184
- US-A- 4 735 046
- US-A- 4 848 082
- US-A- 5 070 694
- PATENT ABSTRACTS OF JAPAN vol. 7, no. 31 (M-192) 8 Février 1983 & JP-A-57 186 051 (NISSAN JIDOSHA K.K.) 16 Novembre 1982

## Description

La présente invention concerne les lignes d'échappements pour moteurs à combustion interne à deux temps, comportant au moins un catalyseur.

Les moteurs auxquels s'applique particulièrement l'invention sont les moteurs de hors-bord, pour lesquels les contraintes d'encombrement sont très sévères.

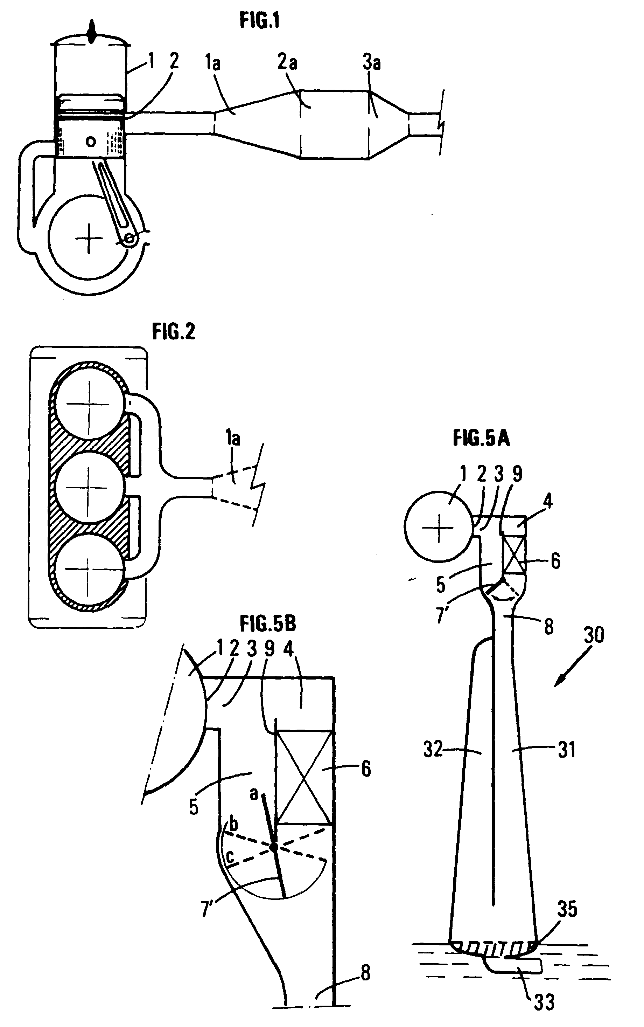

Selon l'art antérieur tel que représenté par exemple sur la Figure 1, une ligne d'échappement optimisée d'un moteur deux temps peut être constituée d'une zone divergente la placée en aval de la lumière 2 ou des lumières d'échappement, suivie d'une zone à section constante 2a puis éventuellement d'une zone convergente 3a.

Cette géométrie tire profit des effets acoustiques des ondes de pression et améliore ainsi le remplissage donc le rendement des moteurs deux temps, sur la plage de régimes la plus large possible. Plus précisément ce type de ligne d'échappement est conçu d'une part pour favoriser l'extraction des gaz brûlés lors de la phase de balayage et d'autre part pour éviter les pertes de gaz frais à l'échappement lors de la fin du balayage. Pour réaliser ces deux fonctions, la ligne d'échappement doit permettre la création d'une onde de dépression au niveau de la lumière d'échappement lors de la phase de balayage autour du point mort bas, puis la création d'une onde de compression au niveau de cette même lumière en fin de balayage avant que la lumière d'échappement ne se ferme.

La géométrie définie ci-avant permet de réaliser ces caractéristiques : en effet l'onde de dépression est obtenue grâce à la zone divergente la tandis que l'onde de compression peut être obtenue grâce à la partie convergente 3a d'une telle ligne d'échappement.

Il est à noter toutefois que sur les moteurs multicylindre, l'onde de compression peut être obtenue en utilisant un arrangement tel que représenté sur la Figure 2 entre les tubulures d'échappement des différents cylindres; cet arrangement va permettre d'utiliser le décalage angulaire existant entre les différents cylindres puisque l'onde de compression créée par l'ouverture de la lumière d'échappement d'un cylindre, qui arrive au niveau de la (ou des) lumière d'échappement d'un autre cylindre un peu avant sa fermeture, soit en fin de balayage de ce dernier, permet de réaliser la compression dans ce cylindre. Bien entendu, les durées d'ouverture des lumières ainsi que les longueurs des tubulures individuelles doivent être calculées de façon appropriée, selon le nombre de cylindres du moteur.

Sur la Figure 2 relative à un moteur multicylindre selon l'art antérieur, la partie divergente la a été dessinée en pointillés car elle peut ne pas exister. Dans cette hypothèse seule une onde de compression est créée, comme indiquée ci-dessus. L'onde de dépression n'étant donc pas présente, le fonctionnement et en particulier la puissance du moteur est alors diminuée vis-à-vis d'un moteur équipé d'un échappement muni d'un divergent.

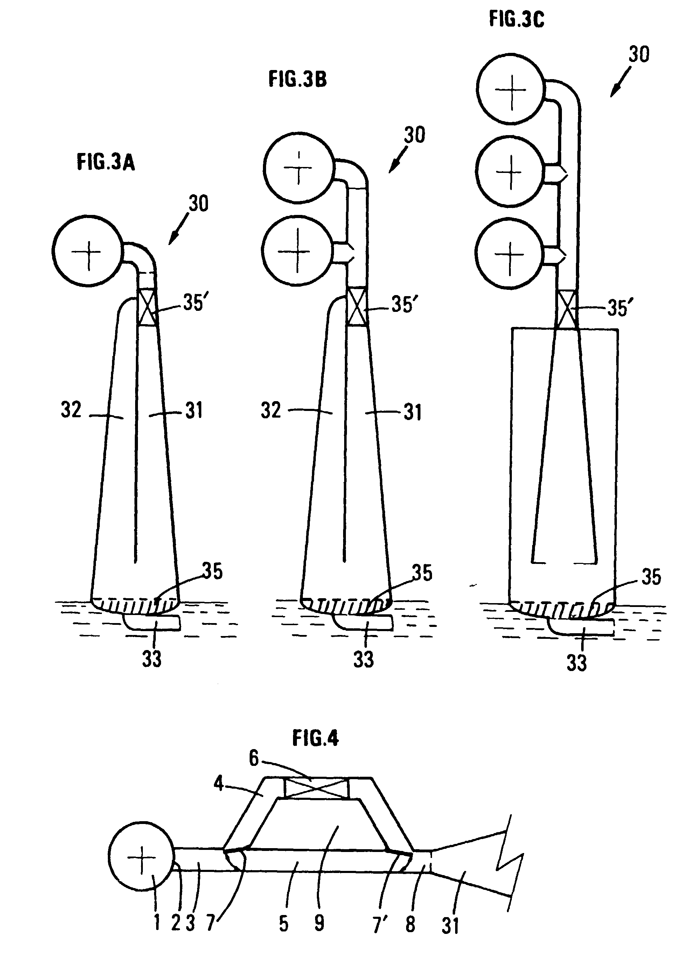

Les Fig. 3A, 3B et 3C illustrent différents exemples de lignes d'échappement 30 de moteurs hors-bord connus. La caractéristique commune de ces lignes d'échappement est la compacité : en effet le divergent et le convefgent, quand il existe, sont "imbriqués" l'un dans l'autre. La Fig. 3A représente le cas d'une ligne d'échappement 30 d'un moteur marin monocylindre qui comporte par exemple une zone divergente 31 que les gaz d'échappement traversent avant de se propager à travers la zone convergente 32; la sortie des gaz s'effectue en partie basse 33 du système d'échappement c'est-à-dire dans l'eau.

La Fig. 3B diffère de la Fig. 3A par le fait qu'il existe deux cylindres au lieu d'un seul. Une zone divergente et une zone convergente sont présentes.

Enfin la Fig. 3C est relative à un moteur trois cylindres ne comportant pas de convergent, la connexion et le décalage angulaire entre les trois cylindres jouant le même rôle.

Si l'on souhaite équiper de telles lignes d'échappement avec au moins un catalyseur destiné à extraire des gaz d'échappement certains polluants, différents emplacements peuvent être envisagés.

Les références 35 et 35' sur les Fig. 3A à 3C montrent des emplacements possibles pour ces catalyseurs. Cependant, ces solutions présentent les inconvénients suivants :
- Les effets acoustiques sont particulièrement réduits voir totalements inhibés par l'adjonction de tels catalyseurs, notamment à cause des pertes de charge qu'ils créent dans la ligne d'échappement et de la modification de la propagation de l'onde au niveau du catalyseur lui-même (celui-ci comportant généralement de multiples canaux de très faible section). Les performances des moteurs peuvent donc être notablement réduites, de sorte que les moteurs deux temps perdent ainsi leurs caractéristiques liées à une puissance spécifique élevée.
- En outre l'adjonction de catalyseur implique un échauffement de la ligne d'échappement à la fois au niveau du catalyseur mais aussi en aval de celui-ci. Cet échauffement est lié à la quantité des polluants émis. Il peut créer des problèmes de surchauffe du catalyseur, ce qui influe négativement sur son efficacité, sa durée de vie, pouvant aller jusqu'à sa destruction. D'autre part l'environnement de la tubulure d'échappement peut aussi être endommagé par une telle surchauffe.

Pour remédier à la surchauffe de la tubulure d'échappement et/ou du bloc-cylindre, un refroidissement de la paroi est donc prévu. Cependant ce système de refroidissement n'est pas suffisant lorsqu'un catalyseur est implanté dans la tubulure d'échappement.

Dans le cas particulier d'un moteur hors-bord (cf. Fig. 3A à 3C), de l'eau, qui peut être de l'eau de mer, est présente dans la tubulure d'échappement 33 à la fois pour le refroidissement et l'insonorisation. Il n'est donc pas souhaitable dans ce cas de placer par un catalyseur tel que 35 près de la sortie échappement car de l'eau risque alors de corroder ce catalyseur 35.

Pour éviter cet inconvénient, il faudrait placer le catalyseur loin de la sortie échappement c'est-à-dire près du moteur (voir 35' sur les Fig. 3A à 3C). Mais, bien entendu, la température des gaz étant très élevée à la sortie de la chambre de combustion, un catalyseur (tel 35') placé directement à ce niveau serait encore plus rapidement détruit, brûlé.

Cette dernière solution n'est donc pas à envisager.

L'art antérieur a par ailleurs déjà divulgué des moyens destinés à éviter la surchauffe de filtres et/ou de catalyseurs implantés dans des lignes d'échappement.

Ainsi, le document DE 3406968 prévoit deux conduites différentes l'une refroidie, l'autre non refroidie qui se rejoignent juste en amont du catalyseur, associées à des systèmes de contrôles des débits afin de moduler la température des gaz traversant le catalyseur.

Le brevet français FR-A-2 608 677 préconise l'utilisation de deux tubulures débouchant à deux niveaux différents dans la chambre de combustion, associées à un moyen de répartition permettant de contrôler le débit de gaz issus de chaque tubulure et traversant un catalyseur situé en aval des tubulures. Le problème à l'origine de cette invention est lié au temps nécessaire pour faire fonctionner le catalyseur, lors des démarrages à froid. Cette invention vise à diminuer ce temps dit "d'amorçage" pendant lequel le catalyseur n'a pas d'influence sur les polluants contenus dans les gaz d'échappement.

On connait par ailleurs le document EP-A-0404320 qui correspond à l'art antérieur à partir duquel a été fait le préambule de la revendication principale. Ce document en reprend donc les éléments essentiels mais il ne divulgue aucun moyen de refroidissement du catalyseur qui, de surcroît, n'est pas intégré au bloc-moteur.

On connait aussi par les documents DE-A-2 432 285 et US 4 848 082 un catalyseur plus ou moins intégré dans le bloc-moteur.

Néanmoins l'actuelle caractéristique de l'invention, à savoir l'arrangement particulier d'au moins un canal de refroidissement du moteur vis-à-vis des parois latérales du catalyseur n'y est ni suggéré ni révélé.

La ligne d'échappement selon l'invention permet de remédier aux inconvénients de l'art antérieur, c'est-à-dire essentiellement aux problèmes de surchauffe du catalyseur, de démarrage à froid et de réduction des performances.

Il est rappelé en outre que :
Les moteurs auxquels s'applique particulièrement bien l'invention sont les moteurs hord-bord pour lesquels les contraintes d'encombrement sont très sévères : la ligne d'échappement selon l'invention répond bien à ce point par sa compacité et par l'entière intégration du catalyseur.

Une ligne d'échappement selon l'invention est donc destinée plus spécifiquement à des moteurs à combustion interne à deux temps, et comporte de façon connue au moins un catalyseur placé à proximité d'au moins un cylindre du moteur.

Selon l'invention, la ligne d'échappement comporte en outre un moyen placé à proximité de la lumière d'échappement de l'un au moins des cylindres, ledit moyen étant destiné à séparer la ligne d'échappement en au moins deux parties (ou branches), l'une renfermant ledit catalyseur, l'autre partie ne comportant pas de catalyseur ; la ligne d'échappement selon l'invention comporte en outre un premier moyen destiné à obturer sélectivement l'une et/ou l'autre desdites parties en fonction d'au moins un paramètre de fonctionnement du moteur.

Conformément à l'invention, le catalyseur est intégré dans le bloc-moteur de telle façon qu'au moins un canal de refroidissement dudit moteur est placé à proximité des parois latérales du catalyseur afin d'être en outre utilisé pour refroidir ledit catalyseur, sans augmenter l'encombrement général de la ligne.

De façon particulière, le moyen destiné à obturer sélectivement l'une et/ou l'autre desdites branches est placé en amont et/ou en aval du moyen de séparation, relativement au sens de propagation des gaz d'échappement dans la ligne d'échappement.

Sans sortir du cadre de l'invention, le catalyseur est placé le plus près possible de la zone dans laquelle se rejoignent les deux branches.

Selon un mode de réalisation de l'invention, le moyen d'obturation est un papillon destiné, à faible charge, à obturer complétement ladite branche sans catalyseur et partiellement ladite branche avec catalyseur.

Selon un autre mode de réalisation de l'invention, le moyen d'obturation est constitué d'un volet placé en aval dudit moyen de séparation et destiné à obturer sélectivement l'une ou l'autre desdites branches.

Avantageusement, le moyen d'obturation peut être un papillon capable d'obturer ladite branche renfermant ledit catalyseur.

Dans le cas d'utilisation en atmosphère marine, le catalyseur peut être relié à un potentiel positif afin de le progéger vis-à-vis de la corrosion.

L'invention vise en outre le précédé de traitement des gaz d'échappement associé à la ligne d'échappement.

La présente invention sera mieux comprise, d'autres détails et avantages ressortiront mieux à la lecture de la description qui va suivre, faite à titre illustratif et nullement limitatif, en référence aux dessins annexés sur lesquels :
- la Figure 4 montre schématiquement et en coupe une ligne d'échappement selon l'invention;
- les Figures 5A et 5B illustrent chacune en coupe un mode de réalisation d'une ligne d'échappement selon l'invention, adaptée à un moteur de type hors-bord;
- la Figure. 6A est une coupe partielle au niveau du bloc-cylindre d'un moteur hors-bord deux temps selon l'art antérieur;
- la Figure 6B est une coupe partielle au niveau du bloc-cylindre d'un moteur hors-bord deux temps, pourvu d'une ligne d'échappement selon l'invention;
- la Figure 7A est une coupe d'un bloc-cylindre d'un moteur hors-bord selon l'art antérieur;
- les Figures 7B et 7C montrent chacune par une coupe au niveau du bloc-cylindre d'un moteur hors-bord, une ligne d'échappement selon l'invention;
- les Figures 8 et 8A représentent chacune une coupe au niveau du bloc-cylindre d'un moteur 6 cylindres en V comportant une ligne d'échappement selon l'invention;
- les Figures 9 et 9A montrent chacune une coupe partielle au niveau du bloc-cylindre d'un moteur 6 cylindres en V comportant une ligne d'échappement selon l'invention.

La Figure 4 illustre la disposition générale d'une ligne d'échappement selon l'invention.

Le cylindre 1 est pourvu d'une lumière d'échappement 2 de laquelle est issu un unique conduit d'échappement 3. A proximité de la lumière 2, le conduit d'échappement 3 est, selon l'invention, divisé en deux parties 4, 5. L'une des parties 4 renferme un catalyseur 6 tandis que l'autre (ou deuxième) partie 5 ne comporte pas de catalyseur. De préférence selon ce mode de réalisation de l'invention les sections de chaque partie 4, 5 sont constantes et sensiblement de la même valeur.

Les deux branches 4, 5 se rejoignent ensuite, en aval du catalyseur 6, pour former un seul conduit 8 qui est de préférence suivi d'un divergent 31 puis éventuellement d'une zone à section constante et d'un convergent 32, comme cela est classique dans l'art antérieur.

Le catalyseur 6, de tout type connu en soi, occupe préférentiellement toute la section de la partie (ou branche) 4 dans laquelle il est placé. En outre, il est disposé de préférence près de la zone dans laquelle se rejoignent les deux branches 4, 5 afin que les gaz chauds sortant de la branche 4 puissent amorcer une post-combustion des gaz sortant de la branche 5 sans catalyseur.

Un moyen d'obturation 7, 7' peut être prévu afin d'obturer sélectivement l'une 4 ou l'autre 5 des branches, selon les conditions de fonctionnement du moteur.

Ce moyen d'obturation peut être placé soit juste en amont de la division de la tubulure (réf. 7 sur la Fig. 4) soit en aval de ladite division (réf. 7') au niveau où les deux branches 4, 5 se rejoignent. Sans sortir du cadre de l'invention, les deux emplacements peuvent être simultanément équipés d'un moyen d'obturation 7, 7'.

Comme il va être expliqué plus en détail maintenant, le moyen d'obturation est ici destiné à obturer sélectivement l'une et/ou l'autre des branches 4, 5 en fonction des conditions de fonctionnement du moteur.

Ainsi, lors du démarrage du moteur ou, plus généralement, en fonctionnement à faible charge, le moteur n'ayant pas besoin d'effets acoustiques pour améliorer ses performances, le moyen d'obturation 7, 7' sera positionné de façon à ce que la plupart et préférentiellement tous les gaz d'échappement passent à travers le catalyseur 6 via la branche 4 : obturation de la branche 5.

La dépollution des gaz d'échappement est de ce fait optimale sans qu'aucun effet négatif n'apparaissent pour autant puisque dans cette phase de fonctionnement, la puissance du moteur n'est pas spécifiquement recherchée.

De façon opposée, lorsque l'obtention de performances est recherchée (fonctionnement à pleine charge) le (ou les) moyen(s) 7, 7' est progressivement amené à obturer plus ou moins partiellement la branche 4 renfermant le catalyseur, de sorte que la majeure partie des gaz d'échappement ne rencontrent pas d'obstacle mais au contraire une géométrie (divergent-convergent) propre à créer un effet acoustique optimal : dépression puis compression de l'onde créée par l'ouverture de la lumière d'échappement 2. Ainsi, aucune perte de charge ne perturbe l'écoulement.

En outre la surchauffe du catalyseur 6 est évitée à pleine charge puisque la quantité de gaz d'échappement qui le traverse est faible.

De préférence le conduit 4 renfermant le catalyseur 6 ne sera jamais complètement fermé afin d'une part de maintenir toujours actif le catalyseur 6 et d'autre part afin que les gaz très chauds ayant traversé le catalyseur 6 puissent, lorsqu'ils atteignent le conduit commun 8, amorcer une post-oxydation naturelle des gaz d'échappement ayant transité par le conduit 5.

L'ouverture du moyen d'obturation 7, 7' doit être astucieusement choisie pour obtenir les effets mentionnés ci-dessus.

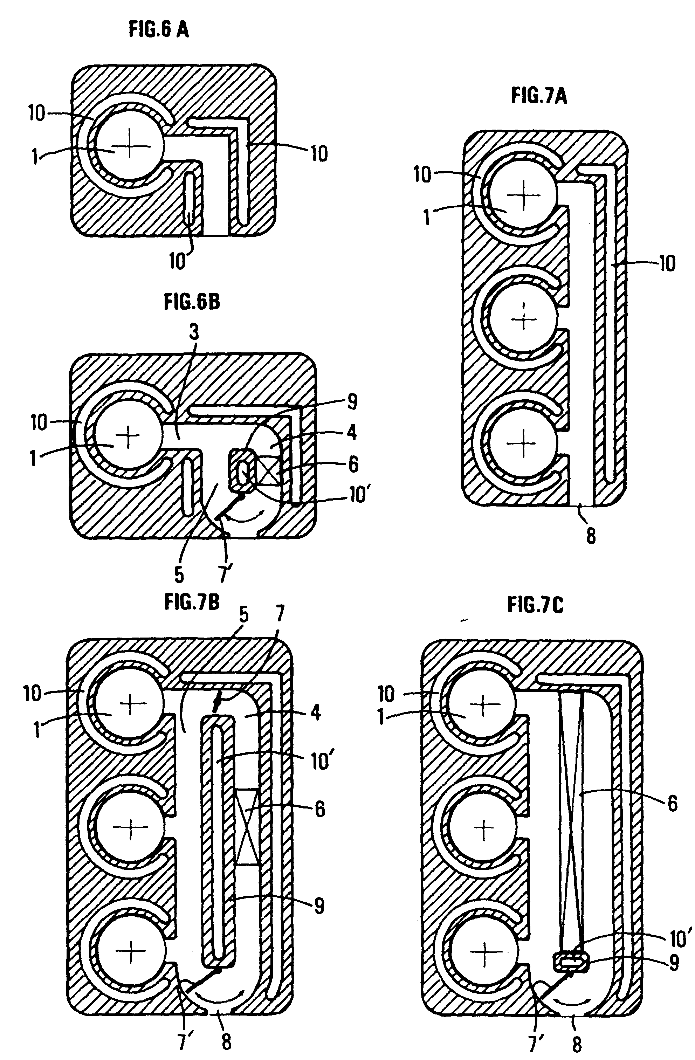

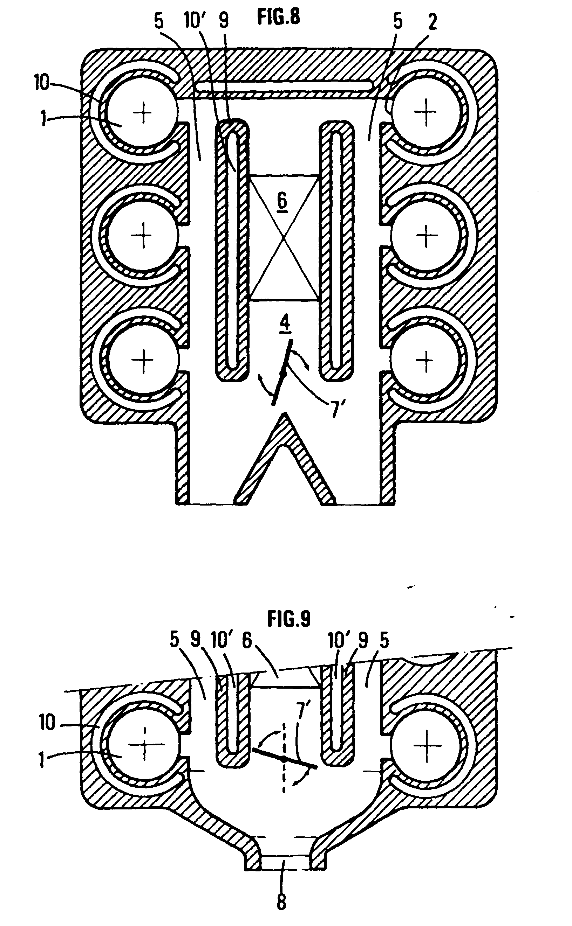

Les Figures 5A et 5B montrent chacune un exemple spécifique d'application concernant un moteur hors-bord monocylindre. La ligne d'échappement est constituée d'une partie connue 30, telle que décrite par exemple dans la partie introductive ci-avant, ladite partie connue 30 étant située en aval de la zone comportant au moins un catalyseur.

Selon le mode de réalisation de l'invention représenté sur les Figures 5A et 5B, le catalyseur 6 est placé à proximité de la lumière d'échappement c'est-à-dire du cylindre du moteur. Il est donc loin du niveau de l'eau, ce qui est favorable pour éviter tout problème de corrosion, sa surchauffe peut cependant être évitée comme il a été indiqué plus haut. De plus le catalyseur 6 est totalement intégré dans le bloc-cylindre, ce qui est tout-à-fait positif au plan de l'encombrement, problème toujours aigü dans les moteurs et particulièrement dans les moteurs deux temps hors-bords.

On voit sur les Fig. 5A et 5B qu'une paroi 9 divise longitudinalement le conduit 3 en sortie du cylindre, créant ainsi deux branches 4, 5 telles que décrites précédemment.

Selon ces Figures, un seul moyen d 'obturation 7' est présent dans cette partie de la ligne d'échappement, ce moyen d'obturation étant placé en aval de la paroi de séparation 9.

Le moyen d'obturation 7' peut être un simple volet tel que représenté sur la Fig.5A. Selon une caractéristique intéressante de l'invention, on choisira astucieusement la longueur du volet 7' de façon à ce qu'il puisse obturer complètement la branche 5 mais pas totalement la branche 4.

Le moyen d'obturation 7' peut aussi être constitué d'un papillon, tel que montré sur la figure 5B, pouvant ouvrir ou fermer simultanément ies deux branches : ainsi en position "a" les deux branches sont dégagées ce qui est préféré pour les conditions de charge élevées et les performances maximales du moteur.

En position "b" la branche 5 est totalement obturée tandis que la branche 4 ne l'est que partiellement. Ceci est à réaliser lorsque la charge diminue, les gaz passant alors tous par le catalyseur.

Enfin en position "c", les gaz passent toujours en totalité dans le catalyseur mais la branche 4 est de plus en plus fermée : cas de très faibles charges pour lesquelles la combustion est améliorée par l'effet d'obturation de l'échappement qui crée une contrepression échappement au niveau des lumières. Cette contrepression aide à contrôler la stratification interne du mélange et améliore la combustion à faible charge d'où une diminution des émissions de polluants c'est-à-dire des polluants à traiter.

Les Fig. 6A et 6B permettent de mettre en relief une autre particularité de l'invention, liée au refroidissement du catalyseur. En effet, selon l'art antérieur représenté par la Fig. 6A des canaux de refroidissement 10 dans lesquels circule l'eau de refroidissement du moteur sont habituellement présents dans le bloc-moteur.

Selon l'invention, l'environnement du catalyseur 6 pourra être refroidi par les canaux de refroidissement 10 puisque ceux-ci passent à proximité de la paroi externe du catalyseur. De plus, si les contraintes d'encombrement le permettent, la paroi de séparation 9 sera suffisamment épaisse pour permettre le creusement d'un canal de refroidissement 10' à l'intérieur même de ladite paroi de séparation, ce qui améliorera davantage le refroidissement du catalyseur 6.

En ce qui concerne les moteurs multicylindres un aménagement de la ligne d'échappement selon l'invention peut être envisagé.

La Fig. 7A représente en coupe un moteur trois cylindres selon l'art antérieur, muni de canaux de refroidissement 10.

Les Fig. 7B et 7C montrent deux aménagements possibles de la ligne d'échappement, conformément à l'invention.

Selon la Fig. 7B une paroi de séparation 9 est placée dans la zone où se rejoignent les trois conduits issus de chaque lumière d'échappement de chacun des cylindres. La paroi 9 est donc destinée à séparer, aussi près que possible de chaque lumière 2, la ligne d'échappement en deux parties 4, 5 comme déjà énoncé.

Vis-à-vis d'un bloc moteur classique tel que représenté schématiquement sur la Fig. 7A, un bloc moteur selon l'invention peut être élargi afin que les parties ou conduits 4 et 5 soient suffisamment larges. En outre la paroi de séparation 9 doit être suffisamment épaisse pour autoriser le creusement, dans son épaisseur, d'une lame ou de petits canaux de refroissement 10'.

Les canaux de refroidissement classiques 10 restent par ailleurs à leur emplacement habituel.

Le catalyseur 6 sera ainsi refroidi par ses deux flancs.

Le moyen d'obturation 7' est de préférence disposé en aval des deux conduits, au niveau où se forme le conduit commun 8.

Selon le mode de réalisation représenté sur la Fig. 7B le catalyseur 6 est placé à proximité du moyen d'obturation 7', ce qui favorise l'amorçage de la post-combustion des gaz d'échappement ne traversant pas le catalyseur par les gaz chauds issus du catalyseur, comme indiqué plus haut.

Facultativement, un second moyen d'obturation 7 peut être prévu en amont des deux conduits 4, 5 afin de compléter la fonction du premier moyen d'obturation 7', selon les conditions de fonctionnement du moteur.

La Fig. 7C montre un mode de réalisation de l'invention applicable à un bloc-cylindre connu tel que représenté sur la Fig. 7A par exemple, et selon lequel le catalyseur 6 présente la forme générale d'un volume faisant face aux lumières d'échappement 2 qui s'étend sur la longueur du bloc, disposé près des lumières d'échappement et délimitant deux conduits.

Un élément de séparation 9 est présent à l'extrémité du catalyseur 6, muni de préférence d'un conduit 10' de refroidissement interne.

Ce moyen de refroidissement supplémentaire 10' permet de diminuer la chaleur générée par le catalyseur 6, d'éviter un rayonnement de chaleur trop important autour du catalyseur et de ce fait d'avoir une meilleure tenue du moteur.

Un volet d'obturation 7' peut avantageusement être placé en aval de l'élément de séparation 9 afin de contrôler le cheminement des gaz d'échappement.

Bien entendu pour tous les modes de réalisation de l'invention qui viennent d'être décrits, la partie de la tubulure d'échappement située en aval des dispositions selon l'invention, c'est-à-dire en aval du conduit commun 8, peut être constituée de façon connue d'un divergent puis d'un convergent. Une géométrie appropriée sera choisie par le concepteur de la ligne d'échappement en fonction de chaque application particulière.

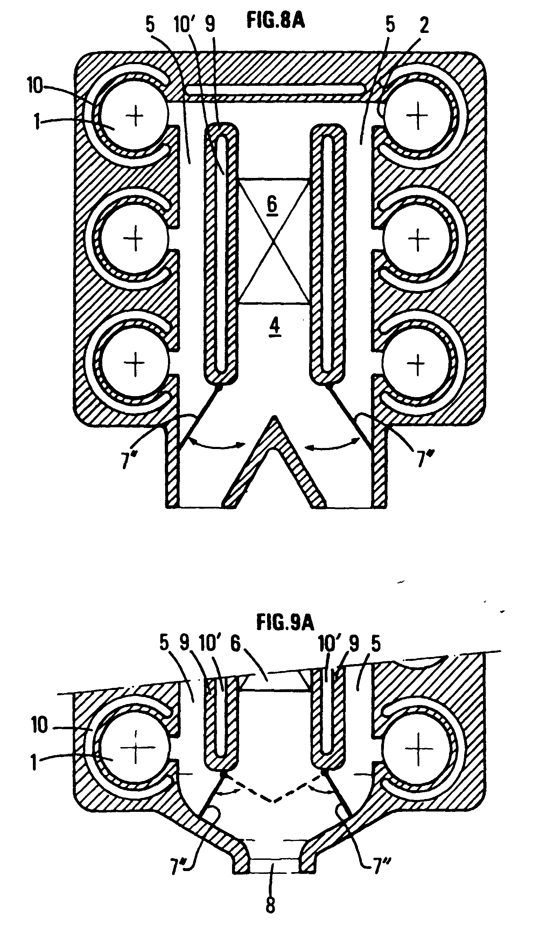

Enfin, les Fig. 8 et 8A, 9 et 9A illustrent chacune un mode de réalisation de l'invention adaptée à des moteurs dits en V c'est-à-dire dont les axes des cylindres couplés deux à deux forment un angle aigu entre eux. Deux blocs ainsi disposés en V pouvent contenir chacun 1, 2, 3 ou 4 cylindres.

La différence entre les modes de réalisations des Fig. 8, 8A et 9, 9A réside uniquement dans les conduits d'échappement qui, selon les Fig. 9 et 9A, se rejoignent juste en aval du moyen d'obturation et qui, selon les Fig. 8 et 8A, sont distincts pour chacun des blocs de cylindre.

Selon l'invention, un unique catalyseur 6 est placé à proximité de l'ensemble des cylindres et plus précisément au centre de l'espace dans lequel débouchent chacune des lumières d'échappement 2. Plus spécifiquement, le catalyseur 6 comporte sur chacune de ses faces latérales faisant face aux lumières 2 une paroi de séparation 9 dépassant largement de part et d'autre du catalyseur, de façon à former une zone 4 dans laquelle les gaz d'échappement sont amenés à traverser le catalyseur. Les parois de séparation 9 sont de préférence refroidies par des canaux 10', comme déjà défini pour les modes de réalisation précédents.

Selon les Fig. 8 et 9, en aval de la zone 4, relativement au sens de propagation des gaz dans la ligne d'échappement, un moyen 7' d'obturation peut être implanté. Il est destiné à obturer plus ou moins partiellement la zone 4.

Selon les Fig.8A et 9A, le moyen d'obturation 7' peut être remplacé par un double moyen d'obturation 7" lui aussi placé en aval de la zone 4 et destiné à obturer sélectivement les zones 4 et 5. Deux volets peuvent être choisis comme moyen d'obturation.

L'avantage des modes de réalisation illustrés par les Fig. 8, 8A et 9, 9A réside en ce qu'un seul catalyseur 6 peut être utilisé pour l'ensemble des cylindres. De plus, la disposition dudit catalyseur est particulièrement avantageuse puisqu'il est aisément intégré dans le bloc cylindre, sans augmentation notable de l'encombrement ni modification excessive du bloc-moteur. En outre le liquide de refroidissement classique du moteur peut être avantageusement utilisé pour refroidir le catalyseur.
De plus, lorsque la branche 4 avec catalyseur est obturée, l'échappement est alors réalisé par deux cheminements distincts.

Dans tous les modes de réalisation envisagés, c'est-à-dire quelque soit le type de moteur auquel s'applique l'invention, le ou les moyens d'obturation sélective 7, 7', 7" peuvent être commandés par une information relative à la température des gaz d'échappement en aval du catalyseur. Ainsi, si cette température devient si élevée que le catalyseur risque une surchauffe, alors la position du moyen d'obturation sélective 7, 7', 7" peut être modifiée afin d'obturer davantage la zone renfermant le catalyseur.

Par ailleurs il est connu dans le domaine des moteurs deux temps qu'un dispositif de restriction placé dans le conduit d'échappement permet de créer une contre-pression au niveau des lumières d'échappement.

Cette contrepression va ainsi ralentir la vidange du cylindre dans la ligne d'échappement pendant le balayage et va générer une aérodynamique interne différente ainsi que de meilleures conditions de stratification notamment en fonctionnement à très faible charge.

Il est donc très intéressant de pouvoir contrôler la contre-pression au niveau de l'échappement notamment à faible charge, afin de favoriser la qualité de la combustion et ainsi diminuer les émissions de polluants du moteur. Le mode de réalisation illustré par la Fig. 5B réalise bien cette caractéristique.

Enfin, le catalyseur 6 peut avantageusement être placé sous un potentiel électrique positif afin de le progéger de la corrosion en atmosphère marine. Une liaison électrique avec le potentiel positif de la batterie est par exemple prévue à cet effet.

Bien entendu diverses modifications et/ou adjonctions pourront être apportées par l'homme de métier à l'objet de l'invention tel que défini ci-avant, sans sortir du cadre de la présente invention.

## Revendications

1. Ligne d'échappement de moteurs à combustion interne à deux temps ayant un bloc-moteur, ladite ligne comprenant au moins un catalyseur (6) placé à proximité d'au moins un cylindre (1) muni d'une lumière d'échappement, au moins un moyen (9) placé à proximité de ladite lumière d'échappement de l'un au moins desdits cylindres (1) et destiné à séparer la ligne d'échappement en deux branches l'une (4) renfermant ledit catalyseur (6), l'autre branche (5) ne comportant pas de catalyseur, et au moins un premier moyen (7, 7', 7") destiné à obturer sélectivement l'une et/ou l'autre desdites branches (4, 5) en fonction d'au moins un paramètre de fonctionnement du moteur, caractérisée en ce que ledit catalyseur (6) est intégré dans le bloc-moteur de telle façon que au moins un canal de refroidissement (10, 10') dudit moteur est placé à proximité des parois latérales du catalyseur afin d'être en outre utilisé pour refroidir ledit catalyseur, sans augmenter l'encombrement général de la ligne.

2. Ligne d'échappement selon la revendication 1, caractérisée en ce que ledit moyen (7, 7', 7") destiné à obturer sélectivement l'une et/ou l'autre desdites branches (4, 5) est placé en aval et/ou en amont dudit moyen de séparation (9) relativement au sens de propagation des gaz d'échappement dans ladite ligne d'échappement.

3. Ligne d'échappement selon l'une des revendications précédentes, caractérisée en ce que ledit catalyseur (6) est placé le plus près possible de la zone dans laquelle se rejoignent les deux branches (4, 5).

4. Ligne d'échappement selon l'une quelconque des revendications précédentes, caractérisée en ce que ledit moyen d'obturation est un papillon destiné, à faible charge, à obturer complètement ladite branche (5) sans catalyseur et partiellement ladite branche (4) avec catalyseur.

5. Ligne d'échappement selon l'une quelconque des revendications 1 à 3, caractérisée en ce que ledit moyen d'obturation est constitué d'un volet (7') placé en aval dudit moyen de séparation (9) et destiné à obturer sélectivement l'une ou l'autre desdites branches (4, 5).

6. Ligne d'échappement selon l'une quelconque des revendications 1 à 3, caractérisée en ce que le moyen d'obturation est un papillon (7') capable d'obturer ladite branche (4) renfermant ledit catalyseur (6).

7. Ligne d'échappement selon l'une quelconque des revendications 1 à 3, caractérisé en ce que ledit moyen d'obturation (7') est constitué de deux volets capables d'obturer sélectivement l'une ou l'autre desdites branches (4, 5).

8. Ligne d'échappement selon l'une quelconque des revendications 1 à 5, caractérisé en ce qu'elle est utilisée dans un moteur de type hors-bord.

9. Ligne d'échappement selon la revendication 8, caractérisé en ce que ledit catalyseur (6) est relié à un potentiel positif afin de le protéger de la corrosion.

10. Ligne d'échappement selon l'une quelconque des revendications 1 à 3, 6, 7, caractérisée en ce qu'elle est utilisée dans un moteur à cylindre en V et en ce que ledit catalyseur (6) est utilisé pour l'ensemble des cylindres.

## Patentansprüche

1. Auslaßleitung von Zweitakt-Brennkraftmaschinen mit einem Motorgetriebeblock, wobei die Leitung wenigstens einen Katalysator (6), der in der Nähe von wenigstens einem Zylinder (1) angeordnet ist, welcher mit einem Auslaßschlitz versehen ist, wenigstens eine Einrichtung (9), die in der Nähe des Auslaßschlitzes von dem wenigstens einen der Zylinder (1) angeordnet und dazu bestimmt ist, die Auslaßleitung in zwei Zweige zu trennen, wobei der eine (4) den Katalysator (6) enthält, der andere Zweig (5) keinen Katalysator umfaßt, und wenigstens eine Haupteinrichtung (7, 7', 7"), die dazu bestimmt ist, den einen und/ oder den anderen der Zweige (4, 5) in Abhängigkeit von wenigstens einem Betriebsparameter des Motors zu verschließen, umfaßt, dadurch gekennzeichnet, daß der Katalysator (6) in dem Motorgetriebeblock integriert ist, derart, daß wenigstens ein Kühlkanal (10, 10') des Motors in der Nähe der Seitenwände des Katalysators angeordnet ist, um darüber hinaus verwendet zu werden, den Katalysator zu kühlen, ohne den allgemeinen Platzbedarf der Leitung zu erhöhen.

2. Auslaßleitung nach Anspruch 1, dadurch gekennzeichnet, daß die Einrichtung (7, 7', 7"), die dazu bestimmt ist, selektiv den einen und/oder den anderen der Zweige (4, 5) zu verschließen, abströmseitig und/oder anströmseitig zu der Einrichtung (9) zur Trennung bezogen auf die Ausbreitungsrichtung der Auslaßgase in der Auslaßleitung angeordnet ist.

3. Auslaßleitung nach einem der vorhergehenden Ansprüche, dadurch gekennzeichnet, daß der Katalysator (6) weitestmöglich nahe der Zone angeordnet ist, in welcher sich die zwei Zweige (4, 5) wieder vereinigen.

4. Auslaßleitung nach irgendeinem der vorhergehenden Ansprüche, dadurch gekennzeichnet, daß die Einrichtung zum Verschließen ein Klappenventil ist, das dazu bestimmt ist, bei geringer Last den Zweig (5) ohne Katalysator vollständig und den Zweig (4) mit Katalysator teilweise zu verschließen.

5. Auslaßleitung nach irgendeinem der Ansprüche 1 bis 3, dadurch gekennzeichnet, daß die Einrichtung zum verschließen aus einer Klappe (7') gebildet ist, die abströmseitig von der Einrichtung (9) zur Trennung angeordnet und dazu bestimmt ist, selektiv den einen oder den anderen der Zweige (4, 5) zu verschließen.

6. Auslaßleitung nach irgendeinem der Ansprüche 1 bis 3, dadurch gekennzeichnet, daß die Einrichtung zum Verschließen ein Klappenventil (7') ist, das geeignet ist, den Zweig (4), welcher den Katalysator (6) enthält, zu verschließen.

7. Auslaßleitung nach irgendeinem der Ansprüche 1 bis 3, dadurch gekennzeichnet, daß die Einrichtung (7') zum Verschließen aus zwei Klappen gebildet ist, die geeignet sind, selektiv den einen oder den anderen der Zweige (4, 5) zu verschließen.

8. Auslaßleitung nach irgendeinem der Ansprüche 1 bis 5, dadurch gekennzeichnet, daß sie in einem Motor des Außenbord-Typs verwendet ist.

9. Auslaßleitung nach Anspruch 8, dadurch gekennzeichnet, daß der Katalysator (6) mit einem positiven Potential verbunden ist, um ihn gegen Korrosion zu schützen.

10. Auslaßleitung nach irgendeinem der Ansprüche 1 bis 3, 6, 7, dadurch gekennzeichnet, daß sie in einem Motor mit V-Zylinder verwendet ist und daß der Katalysator (6) für die Gesamtheit der Zylinder verwendet ist.

## Claims

1. An exhaust line for two-stroke internal combustion engines having an engine block, wherein the said line incorporates at least one catalyst (6) located close to at least one cylinder (1) provided with an exhaust port, at least one means (9) located close to the said exhaust port of one at least of the said cylinders (1) and designed to split the exhaust line into two branches, one (4) of which encloses the said catalyst (6) whilst the other branch (5) contains no catalyst, and at least a first means (7, 7', 7") designed to close off selectively one and/or the other of the said branches (4, 5) as a function of at least one operating parameter of the engine, characterised in that the said catalyst (6) is integrated in the engine block such that at least one cooling passage (10, 10') of the said engine is located close to the lateral walls of the catalyst so that it can also be used to cool the said catalyst without adding to the overall size of the line.

2. An exhaust line as claimed in claim 1, characterised in that the said means (7, 7', 7") designed to close off selectively one and/or the other of the said branches (4, 5) is located downstream and/or upstream of the said dividing means (9) relative to the direction in which the exhaust gases are propagated inside the said exhaust line.

3. An exhaust line as claimed in one of the preceding claims, characterised in that the said catalyst (6) is located as closely as possible to the zone in which the two branches (4, 5) join with one another again.

4. An exhaust line as claimed in any one of the preceding claims, characterised in that the said closing means is a butterfly valve, designed to close off the said branch (5) containing no catalyst completely and the said branch (4) with the catalyst partially at low loads.

5. An exhaust line as claimed in any one of claims 1 to 3, characterised in that the said closing means is a flap (7') located downstream of the said dividing means (9) and designed to close off one or the other of the said branches (4, 5) selectively.

6. An exhaust line as claimed in any one of claims 1 to 3, characterised in that the closing means is a butterfly valve (7') capable of closing off the said branch (4) containing the said catalyst (6).

7. An exhaust line as claimed in any one of claims 1 to 3, characterised in that the said closing means (7') consists of two flaps capable of closing off selectively one or the other of the said branches (4, 5).

8. An exhaust line as claimed in any one of claims 1 to 5, characterised in that it is used in an engine of the outboard type.

9. An exhaust line as claimed in claim 8, characterised in that the said catalyst (6) is connected to a positive potential in order to protect it against corrosion.

10. An exhaust line as claimed in any one of claims 1 to 3, 6, 7, characterised in that it is used in an engine with a V-shaped cylinder configuration and the catalyst (6) is used for all the cylinders.
